**Europäisches Patentamt**

**European Patent Office**

**Office européen des brevets**

(11) Veröffentlichungsnummer: **0 280 018**
**B1**

(12) **EUROPÄISCHE PATENTSCHRIFT**

(45) Veröffentlichungstag der Patentschrift:
**27.06.90**

(21) Anmeldenummer: **88100492.3**

(22) Anmeldetag: **15.01.88**

(51) Int. Cl.⁵: **F16C 11/06,** F16C 33/72

(54) Befestigung der Dichtungsmanschette eines Kugelgelenkes für Kraftfahrzeuge.

(30) Priorität: **24.02.87 DE 3705847**

(43) Veröffentlichungstag der Anmeldung:
**31.08.88 Patentblatt 88/35**

(45) Bekanntmachung des Hinweises auf die Patenterteilung:
**27.06.90 Patentblatt 90/26**

(84) Benannte Vertragsstaaten:
**ES FR GB IT SE**

(56) Entgegenhaltungen:
**DE-A- 2 402 491**
**FR-A- 1 538 231**
**GB-A- 1 000 622**
**GB-A- 1 477 649**

(73) Patentinhaber: **Lemförder Metallwaren AG,**
**Postfach 1220, D-2844 Lemförde(DE)**

(72) Erfinder: **Buhl, Reinhard, Dipl.-Ing.,**
**Eichendorffstrasse 9, D-4508 Bohmte(DE)**

(74) Vertreter: **Bruse, Willy Hans Heinrich, Edisonstrasse 14,**
**D-2800 Bremen 33(DE)**

ACTORUM AG

**Beschreibung**

Die Erfindung betrifft die Befestigung der Dichtungsmanschette eines Kugelgelenks für Kraftfahrzeuge, wobei die Dichtungsmanschette entsprechend dem Oberbegriff des Patentanspruches 1 ausgebildet ist.

Die Gestaltung der Verbindung des mit Bezug auf das Gehäuse des Kugelgelenkes äußeren Endes der Dichtungsmanschette mit dem Kugelzapfen ist problematisch, weil zur Aufrechterhaltung einer Drehbewegung des Kugelzapfens in der Dichtungsmanschette keine feste Verbindung hergestellt werden kann und trotzdem eine sowohl radiale als auch axiale Abdichtung erreicht werden muß.

Bei bekannten Lösungen sitzt der Dichtungsbalg mit einer an seinem Ende ausgebildeten Wulstverdickung, die eine innere Lagerfläche aufweist, unmittelbar auf der Mantelfläche des Kugelzapfens und wird darauf gegebenenfalls durch eigene Materialspannung oder durch die Spannung eines außen aufgesetzten Federringes gehalten. Zur Sicherung der axialen Position sind umlaufende Nut-Feder-Ausbildungen bekannt, jedoch erschweren solche Ausbildungen das dichte Anliegen der radial gerichteten Stützfläche an dem Fahrzeugteil mit dem Lagerauge zur Befestigung des Kugelzapfens. Erschwerend ist außerdem die meistens konische Mantelfläche des Kugelzapfens, durch die eine sichere Befestigung des Kugelzapfens in einem Innenkonus des Lagerauges ermöglicht wird. Mangelhafte Abdichtungen des radialen Dichtungssitzes und auch des axialen Dichtungssitzes führen sehr leicht zu Korrosionen am Kugelzapfen und an dem Fahrzeugteil mit dem Lagerauge für die Befestigung des Kugelzapfens.

Aus der GB-PS 1 477 649 ist eine Anordnung bekannt, bei der eine Dichtungsmanschette aus einem elastisch verformbaren Werkstoff mit dem einen Ende in einer Ringnut am Umfang des Gehäuses befestigt und mit einem in axialer Richtung formschlüssigen Profil des anderen Endes in eine Umfangsausnehmung eines auf dem Kugelzapfen haftend angeordneten Stützringes eingesetzt ist. Dieser Stützring weist eine den Kugelzapfen dicht umschließende Lagerfläche sowie eine dazu radiale Stützfläche auf, die sich gegen das Fahrzeugteil mit dem Lagerauge für die Befestigung des Kugelzapfens ringförmig abstützt. Dadurch kann die Dichtungsmanschette sich mit ihrer Sitzfläche temporär von dem Stützring abheben, damit Luft und überschüssiges Fett aus dem Innenraum des Dichtungsbalges entweichen kann. Mit den zuvor angesprochenen Korrosionsproblemen befaßt sich diese Druckschrift jedoch nicht.

Aufgabe der Erfindung ist die Verringerung und möglichst die Ausschaltung dieser Korrosionen durch eine geänderte Ausbildung der Befestigung des äußeren Endes der Dichtungsmanschette mit dem Kugelzapfen zu erreichen.

Zur Lösung dieser Aufgabe wird eine Ausbildung mit Merkmalen nach dem Kennzeichen des Patentanspruches 1 vorgeschlagen.

Ausreichend wäre eine Gummierung bzw. Beschichtung auf der Oberfläche des Innenkonus und auf der radialen Stützfläche des Stützringes, jedoch soll dadurch eine allseitige Gummierung oder eine allgemeine Kunststoffbeschichtung des Stützringes nicht ausgeschlossen werden, wenn dies z.B. aus produktionstechnischen Gründen geboten ist. Der Werkstoff für die Beschichtung kann auch mit Rücksicht auf gute Gleiteigenschaften auf der Oberfläche des Fahrzeugteiles mit dem Lagerauge ausgewählt werden.

Auf der Zeichnung ist ein Ausführungsbeispiel der Erfindung dargestellt. Es zeigen:

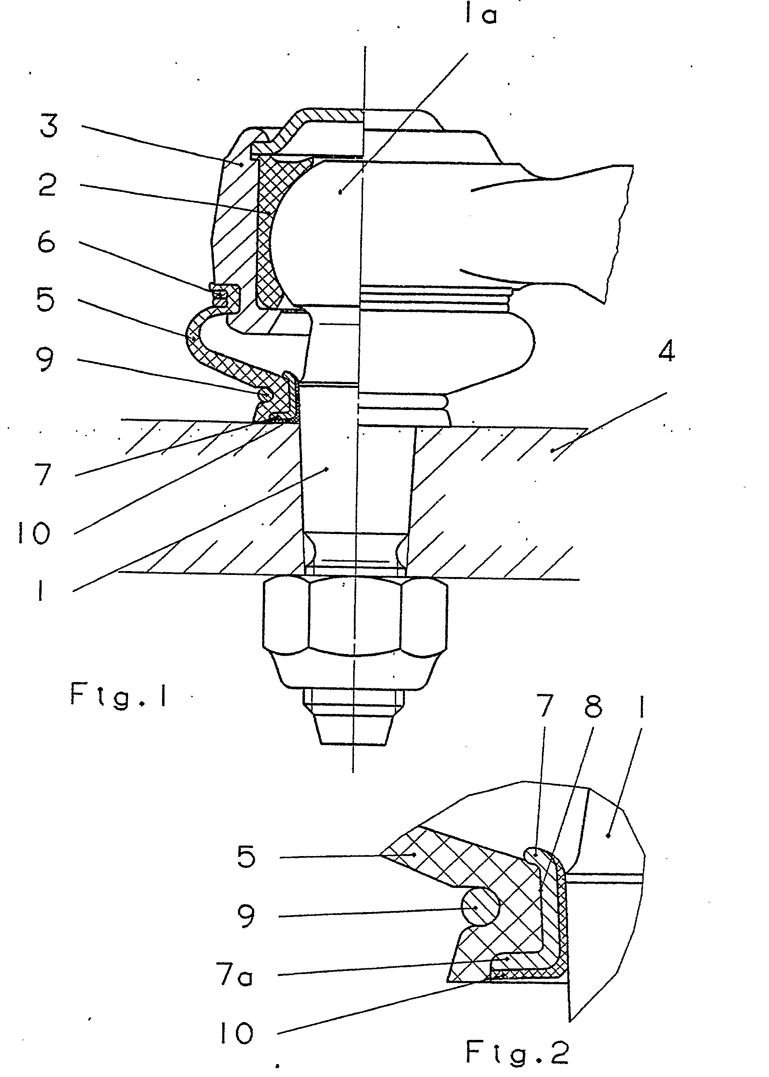

Figur 1 ein Kugelgelenk teilweise in Seitenansicht und teilweise in einem Längsschnitt,

Figur 2 eine Vergrößerung der Ausbildung der Verbindung der Dichtungsmanschette mit dem Kugelzapfen.

Bei dem Kugelgelenk nach dem Ausführungsbeispiel ist die mit dem Kugelzapfen 1 einstückig verbundene Gelenkkugel 1a mittels einer Gelenkschale 2 aus einem begrenzt elastischen Werkstoff in dem Gehäuse 3 des Kugelgelenks gelagert. Der Kugelzapfen 1 ist mittels eines konisch ausgebildeten Schaftteiles innerhalb eines Fahrzeugteiles 4 befestigbar, welches ein Lagerauge aufweist, dessen Innenfläche entsprechend konisch gestaltet ist. Zur Abdichtung zwischen dem Kugelzapfen 1 und dem Gehäuse 3 dient eine Dichtungsmanschette 5 aus einem elastischen Werkstoff, dessen eines Ende mittels eines Federringes 6 in einer umlaufenden Nut am Umfang des Gehäuses 3 befestigt ist. Das andere Ende der Dichtungsmanschette 5 weist Mittel zum dichten Anschluß an den Kugelzapfen 1 und an die dem Gehäuse 3 zugekehrte Oberfläche des Fahrzeugteiles 4 mit dem Lagerauge für die Befestigung des Kugelzapfens 1 auf. Ein zusätzlicher Stützring 7 ist auf den konischen Umfang des Kugelzapfens 1 mit einer entsprechend konischen Innenbohrung aufpreßbar und greift in das äußere Ende der Dichtungsmanschette 5 ein, wobei durch eine Profilierung in axialer Richtung eine formschlüssige Verbindung mit der Dichtungsmanschette 5 erreicht wird. Im Ausführungsbeispiel weist der Stützring 7 in dem durch die Achsebene des Kugelzapfens 1 gelegten Längsschnitt ein U-förmiges Profil auf, so daß an seinem Außenumfang eine umlaufende Nut entsteht, in die die Dichtungsmanschette mit ihrer Lagerfläche 8 eingreift und mittels eines Federringes 9 gehalten ist. Die sich an der Oberfläche des Fahrzeugteils 4 abstützende radiale Stützfläche 7a ist an einem Flansch des Stützringes 7 ausgebildet. Der Werkstoff der Dichtungsmanschette 5 überragt im spannungsfreien Zustand die radiale Stützfläche 7a am Stützring 7 axial, so daß der Werkstoff der Dichtungsmanschette 5 in diesem Bereich beim Einpressen des Kugelzapfens 1 in das Lagerauge elastisch verformt und zusammengedrückt wird, bevor die radiale Stützfläche 7a des Stützringes 7 gegen die Oberfläche des Fahrzeugteils 4 in der Umgebung des Lagerauges zur Anlage kommt. Auf der den Kugelzapfen 1 und auf der das Fahrzeugteil 4 mit dem Lagerauge berührenden Oberfläche weist der Stützring 7 eine Beschichtung 10 aus einem elastischen Werkstoff auf, um die Dichtungswirkung zu erhöhen. Diese Beschichtung 10 kann den Stützring 7 auch vollständig einschließen. Für die Herstellung des Stützringes werden nichtrostende Werkstoffe, insbesondere Kunststoff, bevorzugt.

## Patentansprüche

Befestigung der Dichtungsmanschette (5) eines Kugelgelenks für Kraftfahrzeuge, wobei die Dichtungsmanschette (5) aus einem elastisch verformbaren Werkstoff besteht, mit einem Ende in einer Ringnut am Umfang des Gehäuses (3) befestigt und mit dem anderen Ende mit einem in axialer Richtung formschlüssigen Profil in eine Umfangsausnehmung eines auf dem Kugelzapfen haftend angeordneten Stützringes (7) eingesetzt ist, der eine den Kugelzapfen (1) dicht umschließende Befestigungsfläche sowie eine dazu radiale Stützfläche (7a) aufweist, die sich gegen ein Fahrzeugteil (4) mit einem Lagerauge für die Befestigung des Kugelzapfens (1) ringförmig abstützt, dadurch gekennzeichnet, daß der Stützring (7) auf der Befestigungsfläche und auf der Stützfläche eine Beschichtung (10) aus einem elastischen Werkstoff aufweist.

## Revendications

Fixation du soufflet d'étanchéité (5) d'une articulation à rotule pour véhicules automobiles, le soufflet d'étanchéité (5) étant réalisé en un matériau déformable élastiquement, fixé par une extrémité, dans une rainure annulaire, sur le pourtour du boîtier (3), et placé, par son autre extrémité, avec un profil de forme concordante axialement, dans un évidement périphérique d'une bague d'appui (7), placée sur le pivot de rotule, solidaire de celui-ci, laquelle bague d'appui présente une surface de fixation entourant, de manière étanche, le pivot de rotule (1) ainsi qu'une surface d'appui (7a) radiale, par rapport à la première, qui prend appui, de façon annulaire, contre un élément de véhicule (4), par un œil de support, pour la fixation du pivot de rotule (1), caractérisée en ce que la bague d'appui (7) est revêtue d'une couche (10) de matière élastique, sur la surface de fixation et sur la surface d'appui.

## Claims

Fixing for the sealing bushing (5) of a ball joint for motor vehicles, the sealing bushing (5) consisting of an elastically deformable material, whose one end is fixed in an annular groove on the circumference of the housing (3) and other end is inserted, by a profile which is positively locking in the axial direction, into a circumferential recess of a support ring (7) mounted so as to be locked on the ball spindle, this support ring (7) having a fixing face surrounding the ball spindle (1) in a sealing tight manner and a support face (7a) radial thereto, which bears in an annular manner against a part (4) of the vehicle via a mounting lug for fixing the ball spindle (1), characterised in that the support ring (7) has a coating (10) of elastic material on the fixing face and on the support face.

Fig.1

Fig.2